# EUROPEAN PATENT APPLICATION

(11) **EP 2 136 544 A1**
(43) Date of publication of application: **23.12.2009**
(21) Application number: 08710622.5
(22) Date of filing: 29.01.2008
(51) Int. Cl.: H04N 1/32

(54) **COMMUNICATION DEVICE**

(30) Priority: 08.03.2007 JP 2007059246
(71) Applicant: Sharp Kabushiki Kaisha, Osaka-shi Osaka 545-8522 (JP)
(72) Inventor: ISHIKAWA, Nobuyuki, Osaka-shi, Osaka 545-8522 (JP)
(74) Representative: Treeby, Philip David William
(86) International application number: PCT/JP2008/051295
(87) International publication number: WO 2008/108121

(57) **Abstract**

The invention relates to a communication apparatus which can prevent an erroneous or illicit transmission of a transmission manuscript, whatever the transmission destination may be. When an other party for which the transmission is instructed by an operation and display section (15) is set to be "permitted" in a transmission permitted other party information table (33), a manuscript is read by an image reading device (13), and the read data is correlated with the instructed other party and is stored in an image storage device (19) together with the other party. The instructed other party, administration information of the read manuscript and information of the first page of the read manuscript are printed out as a transmission confirmation table. When an administrator ID inputted by the operation and display section (15) matches any of administrator IDs in an administrator information table (31), the transmission confirmation table is read, and the read data stored in the image storage device (19) including the same administration information as that in the read transmission confirmation table, is transmitted to the other party correlated with the read data.

## Description

### Technical Field

The present invention relates to a communication apparatus which transmits and receives information, and more specifically, relates to a communication apparatus which can prevent an erroneous transmission and an illicit transmission when transmitting information, for example, a communication apparatus, such as a facsimile apparatus, which is connected to a public line network and includes a function of transmitting and receiving facsimile data using a predetermined facsimile transferring procedure, and a communication apparatus which is connected to a network and includes a function of transferring data using electronic mail.

### Background Art

When transmitting information via the public line network or the computer network, there is a possibility that, due to an operating mistake, illicit use, or the like, the information is transmitted to a third party, resulting in an information leak.

A communication apparatus which can more proactively prevent a secret leak due to negligence or deliberate intent is disclosed in Japanese Unexamined Patent Publication JP-A 2005-217879. This communication apparatus does not carry out a transmission operation unless a telephone number inputted at a time of transmission exists among telephone numbers registered in advance. Alternatively, telephone numbers for which a transmission is prohibited are registered in advance, and when the telephone number inputted at the time of transmission is among the telephone numbers registered in advance for which a transmission is prohibited, the communication apparatus does not carry out the transmission operation.

As a technology disclosed in Japanese Unexamined Patent Publication JP-A 2006-259843, there is a data distribution apparatus which can easily prevent an erroneous transmission to a non-specified person when transmitting an electronic document to a plurality of parties. The data distribution apparatus is one which, based on a template of the electronic document to be transmitted, and on metadata written on the electronic document, for example, metadata of a company, a division, a group, or an individual, specifies a limit range of a transmission destination, and renders a transmission impossible unless an address of the transmission destination is within the specified limit range. The template of the electronic document and the transmission subject range are correlated and registered in advance. The categories such as the company, division, and group may be set in accordance with a permission level.

As a technology disclosed in Japanese Unexamined Patent Publication JP-A 10-84437 (1998), there is an image information processing apparatus which can easily specify an electronic document file stored in storage means. The image information processing apparatus, when storing the electronic document file in the storage means, outputs as printed matter a composite image in which are combined a bar code indicating a storage position of the electronic document file, and an image of a first page of the electronic document file. Then, when retrieving and transmitting a necessary electronic document file, the image information processing apparatus reads the printed matter on which is printed the first page of the electronic document file it is wished to transmit, specifies the storage position from the bar code read, and retrieves and transmits the electronic document file. When retrieving, it is also possible to use a password concurrently.

However, the technology disclosed in JP-A 2005-217879 can prevent an erroneous transmission or an illicit transmission to an address of a telephone number which is not registered in advance, or of a telephone number registered in advance as a telephone number for which a transmission is prohibited, but it cannot confirm whether or not a telephone number of an address to which a manuscript is to be transmitted, and contents of the manuscript, are being correctly handled. That is, there is a problem in that it cannot prevent an erroneous or illicit transmission to a telephone number which is registered, or to a telephone number for which a transmission is not prohibited.

The technology disclosed in JP-A 2006-259843 is one which adds a limit to the transmission destination with the template of the electronic document, but cannot confirm whether or not the contents of the manuscript, and the template, are being correctly handled. That is, there is a problem in that it cannot prevent an erroneous or illicit transmission when the address of the transmission destination is within the specified limit range. Furthermore, there is a problem in that, it being possible for the user to set the permission level, it is not possible to prevent an illicit transmission.

The technology disclosed in JP-A 10-84437, when retrieving and transmitting the electronic document file stored in the storage means, specifies the storage position from the bar code of the corresponding printed matter, so can prevent a transmission of a wrong electronic document file, but there is a problem in that it cannot prevent a transmission to a wrong transmission destination.

### Disclosure of Invention

An object of the invention is to provide a communication apparatus which can prevent an erroneous or illicit transmission of a transmission manuscript, whatever the transmission destination may be.

The invention provides a communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and administrator identification information indicating that it is an administrator who is permitted to carry out a transmission of information, with the information to be transmitted and the transmission destination information correlated;
output means for storing in the storage medium and outputting information; and
control means,
the control means, when the transmission destination information is inputted by the input means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where the operator identification information is inputted by the input means, and the operator identification information inputted by the input means matches any of administrator identification information stored in the storage means, causing the reading means to read the information stored in the storage medium that is outputted by the output means, and in the case where a transmission destination indicated by the transmission destination information that is inputted by the input means is a transmission destination included in the transmission destinations that is indicated by the transmission destination permission information stored in the storage means, causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.

According to the invention, information stored in the storage medium is read by the reading means. The transmission destination information indicating the transmission destination, and the operator identification information for identifying the operator are inputted by the input means. The information to be transmitted read by the reading means, the transmission destination information inputted by the input means, the transmission destination permission information indicating the transmission destination to which a transmission of information is permitted, and the administrator identification information indicating that it is an administrator who is permitted to carry out a transmission of information, are stored, with the information to be transmitted and the transmission destination information correlated, by the storage means. The information is stored in the storage medium, and outputted by the output means.

Then, with the control means, when the transmission destination information is inputted by the input means, the information to be transmitted is read by the reading means, the administration information including the transmission manuscript partial information including at least a portion of information to be transmitted that is read by the reading means and the transmission destination information inputted by the input means, is stored in the storage medium and outputted by the output means, and furthermore, in the case where the operator identification information is inputted by the input means, and the operator identification information inputted by the input means matches any of administrator identification information stored in the storage means, the information stored in the storage medium that is outputted by the output means is read by the reading means, and in the case where a transmission destination indicated by the transmission destination information that is inputted by the input means is a transmission destination included in the transmission destinations that is indicated by the transmission destination permission information stored in the storage means, information to be transmitted that, out of the information to be transmitted stored in the storage means, corresponds to the transmission destination indicated by the transmission destination information of the read administration information, and includes information matching the transmission manuscript partial information included in the administration information, is transmitted by transmission means to the transmission destination indicated by the transmission destination information included in the administration information read by the reading means.

Consequently, the administrator can check a portion of the transmission manuscript, and the transmission destination, and furthermore, as it is transmitted only by the administrator to a transmission destination for which a transmission is permitted, it is possible to prevent an erroneous transmission and an illicit transmission of the transmission manuscript, whatever the transmission destination may be. In this way, it is possible to prevent an information leak.

Also, in the invention, it is preferable that the input means is capable of inputting setting change information for changing the setting of the transmission destination permission information stored in the storage means, and
the control means, when the operator identification information inputted by the input means matches any of administrator identification information stored in the storage means, changes the setting of the transmission destination permission information stored in the storage means, based on the setting change information inputted by the input means.

According to the invention, it is possible, with the input means, to input setting change information for changing the setting of the transmission destination permission information stored in the storage means. When the operator identification information inputted by the input means matches any of administrator identification information stored in the storage means, the setting of the transmission destination permission information stored in the storage means is changed, based on the setting change information inputted by the input means, by the control means. Consequently, only the administrator can change the setting of the transmission destination permission information.

Also, in the invention, it is preferable that the storage means further stores permitted operator identification information for identifying an operator permitted to carry out an operation, and
the control means, only when first operator identification information out of the operator identification information is inputted by the input means, and the inputted first operator identification information matches any of permitted operator identification information stored in the storage means, causes the reading means to read the information to be transmitted, and causes the output means to store in the storage medium and output the administration information, and
only when, in causing the transmission means to transmit the information to be transmitted, the operator identification information inputted by the input means differs from the first operator identification information out of the operator identification information, causes the transmission means to transmit the information to be transmitted.

According to the invention, the permitted operator identification information for identifying an operator permitted to carry out an operation is further stored by the storage means. With the control means, only when the first operator identification information out of the operator identification information is inputted by the input means, and the inputted first operator identification information matches any of permitted operator identification information stored in the storage means, the information to be transmitted is read by the reading means, and the administration information is stored in the storage medium, and outputted by the output means. Only when, in causing the transmission means to transmit the information to be transmitted, the operator identification information inputted by the input means differs from the first operator identification information out of the operator identification information, the information to be transmitted is transmitted by the transmission means. Consequently, it is possible to make the administrator a person differing from the transmitter.

Also, in the invention, it is preferable that the administration information is encoded information.

According to the invention, as the administration information is encoded information, it is possible to easily recognize the encoded information printed in a storage medium, for example, a printed matter.

Also, in the invention, it is preferable that the transmission destination permission information is information including only the transmission destination information on the transmission destinations for which a transmission is permitted.

According to the invention, as the transmission destination permission information is information including only the transmission destination information on the transmission destinations for which a transmission is permitted, it is possible to administer the transmission destination permission information separately from a telephone directory.

Also, in the invention, it is preferable that the transmission destination permission information is information in which is set a transmission permission or transmission prohibition for all the transmission destinations.

According to the invention, as the transmission destination permission information is information in which is set a transmission permission or transmission prohibition for all the transmission destinations, it is possible to determine the possibility of a transmission for each transmission destination.

Also, in the invention, it is preferable that the transmission destination permission information is information indicating the transmission destinations for which the transmission permission is set, in the case of both operator transmission destination permission information in which the transmission permission or transmission prohibition is set by the operator, and administrator transmission destination permission information in which the transmission permission or transmission prohibition is set by the administrator.

According to the invention, as the transmission destination permission information is information indicating the transmission destinations for which the transmission permission is set, in the case of both operator transmission destination permission information in which the transmission permission or transmission prohibition is set by the operator, and administrator transmission destination permission information in which the transmission permission or transmission prohibition is set by the administrator, it is possible to transmit only to a transmission destination for which both the transmitter and the administrator set transmission permitted.

Also, in the invention, it is preferable that the output means further outputs transmission interruption information indicating interruption of a transmission due to the transmission destination being not one for which a transmission destination is permitted, and
the control means, when the transmission destination indicated by the transmission destination information inputted by the input means is not a transmission destination included in the transmission destinations indicated by the transmission destination permission information stored in the storage means, causes the output means to output the transmission interruption information.

According to the invention, transmission interruption information indicating interruption of a transmission due to the transmission destination being not one for which a transmission destination is permitted is further outputted by the output means. With the control means, when the transmission destination indicated by the transmission destination information inputted by the input means is not a transmission destination included in the transmission destinations indicated by the transmission destination permission information stored in the storage means, the transmission interruption information is outputted by the output means. Consequently, it is possible to inform the transmitter or administrator that it is not possible to transmit due to the transmission destination being one for which a transmission is not permitted.

Also, in the invention, it is preferable that the output means includes at least one of:
a printing output section which stores in the storage medium and outputs the transmission interruption information,
a mail output section which outputs the transmission interruption information as an electronic mail to the administrator indicated by administrator identification information which matches the operator identification information inputted by the input means, out of the administrator identification information stored in the storage means, and
a display output section which displays and outputs on a display device the transmission interruption information.

According to the invention, at least one of the printing output section which stores in the storage medium and outputs the transmission interruption information, the mail output section which outputs the transmission interruption information as an electronic mail to the administrator indicated by the administrator identification information which matches the operator identification information inputted by the input means, out of the administrator identification information stored in the storage means, and the display output section which displays and outputs on a display device the transmission interruption information, is included in the output means. Consequently, it is possible to inform the transmitter or administrator using a storage medium, for example, a printed matter, an electronic mail, or a display on display means.

Also, in the invention, it is preferable that the control means, when the operator identification information is inputted by the input means in response to the transmission interruption information outputted by the output means, and the inputted operator identification information matches any of administrator identification information stored in the storage means, changes the setting of the transmission destination permission information stored in the storage means to transmission permitted based on setting change information inputted by the input means, and thereafter causes the transmission means to transmit the information to be transmitted.

According to the invention, with the control means, when the operator identification information is inputted by the input means in response to the transmission interruption information outputted by the output means and, and the inputted operator identification information matches any of administrator identification information stored in the storage means, after the setting of the transmission destination permission information stored in the storage means is changed to transmission permitted based on setting change information inputted by the input means, the information to be transmitted is transmitted by the transmission means. Consequently, when a transmission is interrupted, the administrator can change the setting of the transmission destination from prohibited to permitted, and can correctly transmit the interrupted transmission.

Also, in the invention, it is preferable that the transmission interruption information includes transmission destination information indicating the transmission destination for which the transmission has been interrupted, and
the control means, when the operator identification information is inputted by the input means in response to the transmission interruption information outputted by the output means, and the inputted operator identification information matches any of administrator identification information stored in the storage means, changes setting of the transmission destination permission information of the transmission destination indicated by the transmission destination information included in the transmission interruption information, to transmission permitted, out of the transmission destination permission information stored in the storage means, and thereafter causes the transmission means to transmit the information to be transmitted.

According to the invention, the transmission interruption information includes transmission destination information indicating the transmission destination for which the transmission has been interrupted. With the control means, when the operator identification information is inputted by the input means in response to the transmission interruption information outputted by the output means, and the inputted operator identification information matches any of administrator identification information stored in the storage means, after changing the setting of the transmission destination permission information of the transmission destination indicated by the transmission destination information included in the transmission interruption information to transmission permitted, out of the transmission destination permission information stored in the storage means, the information to be transmitted is transmitted by the transmission means. Consequently, when a transmission is interrupted and the administrator gives permission, it is possible to automatically change the setting of the transmission destination for which the transmission has been interrupted from prohibited to permitted, and it is possible to correctly transmit the interrupted transmission.

Also, in the invention, it is preferable that when the operator identification information is inputted by the input means in response to the transmission interruption information outputted by the output means, and the inputted operator identification information matches any of administrator identification information stored in the storage means, the control means causes the transmission means to transmit the information to be transmitted, without changing the setting of the transmission destination permission information stored in the storage means.

According to the invention, with the control means, when the operator identification information is inputted by the input means in response to the transmission interruption information outputted by the output means, and the inputted operator identification information matches any of administrator identification information stored in the storage means, the information to be transmitted is transmitted by the transmission means, without the setting of the transmission destination permission information stored in the storage means being changed. Consequently, when a transmission is interrupted and the administrator gives permission, it is possible to temporarily change the setting of the transmission destination for which the transmission has been interrupted from prohibited to permitted, and it is possible to correctly transmit the interrupted transmission.

Also, in the invention, it is preferable that, the communication apparatus further comprises reception means for receiving an electronic mail, and
the control means, when an electronic mail responding to an electronic mail outputted by the output means is received by the reception means, changes the setting of the transmission destination permission information stored in the storage means, to transmission permitted, and thereafter causes the transmission means to transmit the information to be transmitted.

According to the invention, an electronic mail is received by the reception means. With the control means, when an electronic mail responding to an electronic mail outputted by the output means is received by the reception means, after the setting of the transmission destination permission information stored in the storage means is changed to transmission permitted, the information to be transmitted is transmitted by the transmission means. Consequently, when a transmission is interrupted and the administrator responds with an electronic mail, it is possible to automatically change the setting of the transmission destination for which the transmission has been interrupted from prohibited to permitted, and it is possible to correctly transmit the interrupted transmission.

Also, in the invention, it is preferable that the storage means stores transmission interruption information indicating interruption of a transmission due to the transmission destination being not one for which a transmission destination is permitted, correlated with the transmission destination information indicating the transmission destination,
the output means outputs information including the transmission interruption information,
the input means inputs output instruction information instructing an output of the transmission interruption information, and
the control means, when the transmission destination indicated by the transmission destination information inputted by the input means is not a transmission destination included in the transmission destinations indicated by the transmission destination permission information stored in the storage means, stores the transmission interruption information in the storage means, and furthermore, when the output instruction information is inputted by the input means, causes the output means to output the transmission destination permission information stored in the storage means, together with the correlated transmission destination.

According to the invention, the transmission interruption information indicating interruption of a transmission due to the transmission destination being not one for which a transmission destination is permitted is stored, by the storage means, correlated with the transmission destination information indicating the transmission destination. Information including the transmission interruption information is outputted by the output means. Output instruction information instructing an output of the transmission interruption information is inputted by the input means. With the control means, when the transmission destination indicated by the transmission destination information inputted by the input means is not a transmission destination included in the transmission destinations indicated by the transmission destination permission information stored in the storage means, the transmission interruption information is stored in the storage means, and furthermore, when the output instruction information is inputted by the input means, the transmission destination permission information stored in the storage means is outputted, together with the correlated transmission destination, by the output means. Consequently, the administrator can carry out the work of changing or not changing the settings of the transmission destinations at one time.

Also, the invention provides a communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and administrator identification information indicating that it is an administrator who is permitted to carry out a transmission of information, with the information to be transmitted and the transmission destination information correlated;
output means for storing in the storage medium and outputting information; and
control means,
the control means, when the transmission destination information is inputted by the input means, and the transmission destination indicated by the transmission destination information inputted by the input means is a transmission destination included in the transmission destination indicated by the transmission destination permission information stored by the storage means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where the operator identification information is inputted by the input means, and the operator identification information inputted by the input means matches any of administrator identification information stored in the storage means, causing the reading means to read the information stored in the storage medium that is outputted by the output means, and causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.

According to the invention, the information stored in the storage medium is read by the reading means. The transmission destination information indicating the transmission destination, and the operator identification information for identifying the operator, are inputted by the input means. The information to be transmitted read by the reading means, the transmission destination information inputted by the input means, the transmission destination permission information indicating the transmission destination to which a transmission of information is permitted, and the administrator identification information indicating that it is an administrator who is permitted to carry out a transmission of information, are stored, with the information to be transmitted and the transmission destination information correlated, by the storage means. The information is stored in the storage medium, and outputted by the output means.

Then, with the control means, when the transmission destination information is inputted by the input means, and the transmission destination indicated by the transmission destination information inputted by the input means is a transmission destination included in the transmission destination indicated by the transmission destination permission information stored by the storage means, the information to be transmitted is read by the reading means, and administration information including transmission manuscript partial information including at least a portion of the information to be transmitted that is read by the reading means and the transmission destination information inputted by the input means, is stored in the storage medium and outputted by the output means, and furthermore, in the case where the operator identification information is inputted by the input means, and the operator identification information inputted by the input means matches any of administrator identification information stored in the storage means, the information stored in the storage medium that is outputted by the output means is read by the reading means, and information to be transmitted that, out of the information to be transmitted stored in the storage means, corresponds to the transmission destination indicated by the transmission destination information of the read administration information, and includes information matching the transmission manuscript partial information included in the administration information, is transmitted by transmission means to the transmission destination indicated by the transmission destination information included in the administration information read by the reading means.

Consequently, as it is sufficient that the administrator carries out a check of a portion of the transmission manuscript, and of the transmission destination, only when the transmission destination is permitted, and furthermore, as the transmission manuscript is transmitted only by the administrator to a transmission destination for which a transmission is permitted, it is possible to prevent an erroneous transmission and an illicit transmission of the transmission manuscript, whatever the transmission destination may be.

Also, the invention provides a communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and permitted operator identification information indicating that it is an operator who is permitted to carry out a transmission of information, with the information to be transmitted and the transmission destination information correlated;
output means for storing in the storage medium and outputting information; and
control means,
the control means, when first operator identification information out of the operator identification information, and the transmission destination information are inputted by the input means, and the inputted first operator identification information matches any of permitted operator identification information stored in the storage means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where second operator information differing from the first operator information out of the operator identification information is inputted by the input means, and the inputted second operator identification information matches any of permitted operator identification information stored in the storage means, causing the reading means to read the information stored in the storage medium that is outputted by the output means, and in the case where a transmission destination indicated by the transmission destination information inputted by the input means is a transmission destination included in the transmission destinations that is indicated by the transmission destination permission information stored in the storage means, causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.

According to the invention, the information stored in the storage medium is read by the reading means. The transmission destination information indicating the transmission destination, and the operator identification information for identifying the operator, are inputted by the input means. The information to be transmitted read by the reading means, the transmission destination information inputted by the input means, the transmission destination permission information indicating the transmission destination to which a transmission of information is permitted, and the permitted operator identification information indicating that it is an operator who is permitted to carry out a transmission of information, are stored, with the information to be transmitted and the transmission destination information correlated, by the storage means. The information is stored in the storage medium, and outputted by the output means.

Then, with the control means, when the first operator information out of the operator identification information and the transmission destination information are inputted by the input means, and the inputted first operator identification information inputted by the input means matches any of permitted operator identification information stored in the storage means, the information to be transmitted is read by the reading means, and the administration information including the transmission manuscript partial information including at least a portion of the information to be transmitted that is read by the reading means and the transmission destination information inputted by the input means, is stored in the storage medium and outputted by the output means, and furthermore, in the case where the second operator information differing from the first operator information out of the operator identification information is inputted by the input means, and the inputted second operator identification information matches any of permitted operator identification information stored in the storage means, the information stored in the storage medium outputted by the output means is read by the reading means, and in the case where the transmission destination indicated by the transmission destination information inputted by the input means is a transmission destination included in the transmission destinations indicated by the transmission destination permission information stored in the storage means, the information to be transmitted that, out of the information to be transmitted stored in the storage means, corresponds to the transmission destination indicated by the transmission destination information of the read administration information, and includes the information matching the transmission manuscript partial information included in the administration information, is transmitted by the transmission means to the transmission destination indicated by the transmission destination information included in the administration information read by the reading means.

Consequently, an operator differing from the transmitter can check a portion of the transmission manuscript, and the transmission destination, and furthermore, as the transmission manuscript is transmitted only by the operator differing from the transmitter to a transmission destination for which a transmission is permitted, it is possible to prevent an erroneous transmission and an illicit transmission, whatever the transmission destination may be.

### Brief Description of the Drawings

Other and further objects, features, and advantages of the invention will be more explicit from the following detailed description taken with reference to the drawings wherein:
Fig. 1 is a block diagram illustrating a configuration of a facsimile apparatus according to one embodiment of the invention;
Fig. 2 illustrates a user information table stored in a storage device shown in Fig. 1;
Fig. 3 is illustrates an administrator information table stored in the storage device shown in Fig. 1;
Fig. 4 is Fig. 4 illustrates one example of an other party information table stored in the storage device shown in Fig. 1;
Figs. 5A and 5B illustrate examples of the transmission permitted other party information table stored in the storage device shown in Fig. 1;
Figs. 6A to 6C illustrate examples of other party information registration screens for setting the other party information table shown in Fig. 4, and a transmission permitted other party information table shown in Fig. 5A;
Figs. 7A to 7C illustrate examples of other party information registration screens for setting the other party information table shown in Fig. 4, and the transmission permitted other party information table shown in Fig. 5B;
Fig. 8 is a flowchart of a communication possibility setting process carried out by the facsimile apparatus shown in Fig. 1;
Fig. 9 is a flowchart of a transmission confirmation table output process carried out by the facsimile apparatus shown in Fig. 1;
Fig. 10 is a flowchart of a transmission confirmation table confirmation process carried out by the administrator;
Fig. 11 is a flowchart of a transmission process carried out by the facsimile apparatus shown in Fig. 1; and
Fig. 12 illustrates an interruption and retransmission procedure in the facsimile apparatus shown in Fig. 1.

### Best Mode for Carrying out the Invention

Now referring to the drawings, preferred embodiments of the invention will be described in detail.

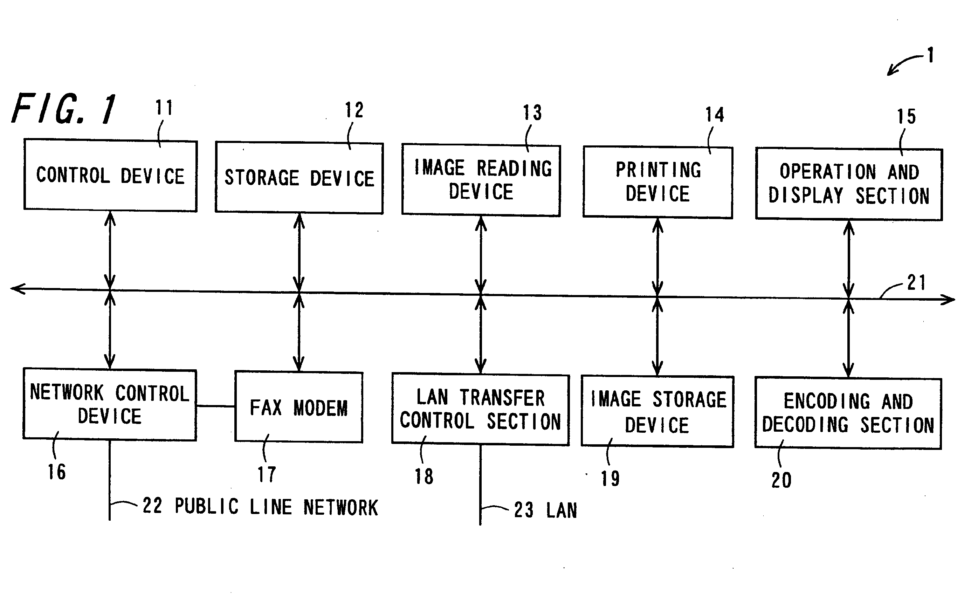

Fig. 1 is a block diagram illustrating a configuration of a facsimile apparatus 1 according to one embodiment of the invention. A communication apparatus is a communication apparatus which is connected to a public line network and includes a function of transmitting and receiving facsimile data using a facsimile transferring procedure, for example, a facsimile apparatus, or a communication apparatus which is connected to a computer network and includes a function of transferring data using, for example, electronic mail, and will be described hereafter with the facsimile apparatus 1 as an example.

The facsimile apparatus 1, which is the communication apparatus, includes a control device 11, a storage device 12, an image reading device 13, a printing device 14, an operation and display section 15, a network control device 16, a facsimile (FAX) modem 17, a local area network (LAN) transfer control section 18, an image storage device 19, an encoding and decoding section 20, and a data bus 21.

The control device 11 is composed of, for example, a central processing unit (CPU), and controls the image reading device 13, the printing device 14, the operation and display section 15, the network control device 16, the FAX modem 17, the LAN transfer control section 18, the image storage device 19, and the encoding and decoding section 20, by executing a program stored in the storage device 12. The storage device 12 is composed of, for example, a semiconductor memory or a hard disc drive, and stores the program executed by the control device 11, and information necessary for the control device 11 to control each component.

The image reading device 13 is composed of, for example, a scanner, and reads a recording medium, for example, a transmission manuscript or printed matter, and sends the information read to the image storage device 19, causing it to be stored. The printing device 14 is composed of, for example, a printer, and prints information retrieved from the image storage device 19, or information informed of by the control device 11, on printing paper or the like, and outputs it as printed matter. The operation and display section 15 is composed of, for example, operation buttons and a liquid crystal display device, as well as displaying information informed of by the control device 11 on the liquid crystal display device, and sends information inputted by the operation buttons to the control device 11.

The network control device 16 is connected to a public line network, and transmits and receives information informed of by the control device 11 to and from another communication device connected to the public line network 22. The FAX modem 17 transmits and receives image information via the network control device 16, in accordance with a facsimile transferring procedure. The LAN transfer control section 18 is connected to a computer network, for example, a LAN 23, and transmits and receives information to and from another communication device connected to the LAN 23. The image storage device 19 is composed of, for example, a semiconductor memory or a hard disc device, and stores image information read by the image reading device 13, or image information received by the network control device 16 or LAN transfer control section 18. The encoding and decoding section 20 carries out an encoding or decoding of information of which an encoding or decoding is necessary in order to transmit and receive the information on the public line network 22 or LAN 23. The data bus 21 is a signal line for transferring information out of the components, such as the control device 11, the storage device 12, the image reading device 13, the printing device 14, the operation and display section 15, the network control device 16, the FAX modem 17, the LAN transfer control section 18, the image storage device 19, and the encoding and decoding section 20.

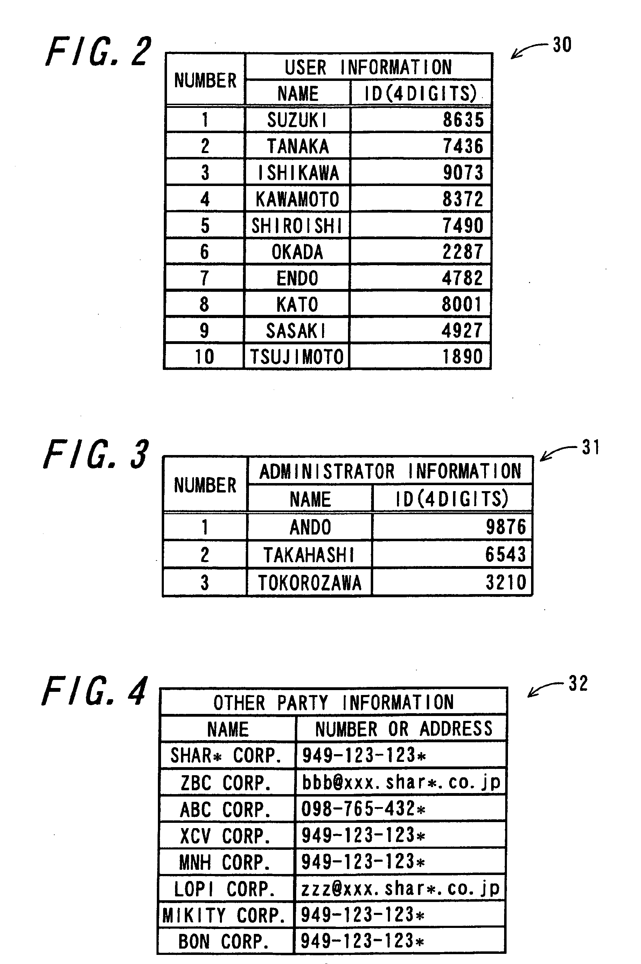

Fig. 2 illustrates a user information table 30 stored in the storage device 12 shown in Fig. 1. The user information table 30 being a table in which are registered users who are permitted to operate the facsimile apparatus 1, names and four digit identification (ID) are registered in numerical order as user information. The users registered in the user information table 30 can operate the facsimile apparatus 1, causing it to read a transmission manuscript, and carry out an operation for a transmission. Although ten users are registered in Fig. 2, registration is also possible when there are eleven people or more. A name "SUZUKI" and ID "8635" being registered in a number "1", thereafter, names and ID "TANAKA" and "7436", "ISHIKAWA" and "9073", "KAWAMOTO" and "8372", "SHIROISHI" and "7490", "OKADA" and "2287", "ENDO" and "4782", "KATO" and "8001", "SASAKI" and "4927", and "TSUJIMOTO" and "1890", are registered in numerical order.

Fig. 3 illustrates an administrator information table 31 stored in the storage device 12 shown in Fig. 1. The administrator information table 31 being a table in which are registered administrators who administer a transmission of a manuscript, names and four digit ID are registered in numerical order as administrator information. The administrators registered in the administrator information table 31 can check a portion of a manuscript of which a transmission is requested, and a transmission destination, by means of a transmission confirmation table, to be described hereafter, return a transmission confirmation table with which there is a problem to the user who has requested the transmission, and transmit only a manuscript of a transmission confirmation table with which there is no problem. Furthermore, the administrators can carry out a permitting of a transmission of an other party information table 32, to be described hereafter, and a setting of a transmission permitted other party information table 36. Although three administrators are registered in Fig. 3, registration is also possible when there are four people or more. A name "ANDO" and ID "9876" being registered in a number "1", thereafter, names and ID "TAKAHASHI" and "6543", and "TOKOROZAWA" and "3210", are registered in numerical order.

Fig. 4 illustrates one example of an other party information table 32 stored in the storage device 12 shown in Fig. 1. The other party information table 32 is a telephone directory, and stores a "NAME" and a "NUMBER OR ADDRESS" as other party information. The "NAME" is the name of an other party, and the "NUMBER OR ADDRESS" are respectively a telephone number or electronic mail address of the other party. The other party information table 32 may be provided for each other party, and it may be one table common for all users.

In the other party information table 32 shown in Fig. 4, eight items of other party information, specifically, a name "SHAR* CORP." and a number "949-123-123*", a name "ZBC CORP." and an address "bbb@xxx.shar*.co.jp", a name "ABC CORP." and a number "098-765-432*", a name "XCV CORP." and a number "949-123-123*", a name "MNH CORP." and a number °949-123-123*", "LOPI CORP." and an address "zzz@xxx.shar*.co.jp", "MIKITY CORP." and a number "949-123-123*", and "BON CORP." and a number "949-123-123*", are shown.

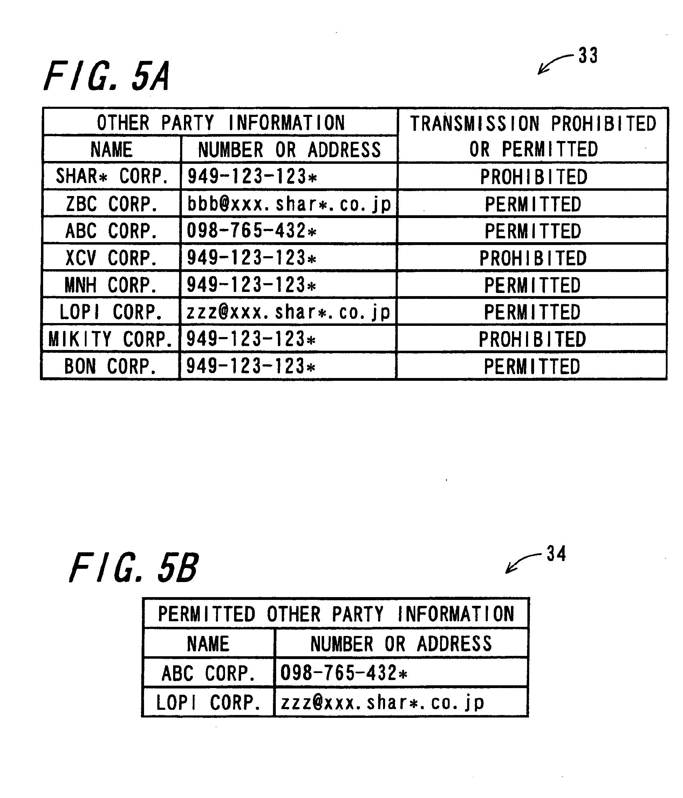

Figs. 5A and 5B illustrate examples of a transmission permitted other party information table stored in the storage device 12 shown in Fig. 1. Fig. 5A illustrates one example of a transmission permitted other party information table 33 in which a possibility of a transmission is set for each other party. The transmission permitted other party information table 33 stores the "NAME" and the "NUMBER OR ADDRESS" as the other party information, and stores "TRANSMISSION PROHIBITED OR PERMITTED" as the possibility of the transmission. "TRANSMISSION PROHIBITED OR PERMITTED" indicates whether the transmission is prohibited or permitted. The setting of "TRANSMISSION PROHIBITED OR PERMITTED" can be changed by the administrator. The "NAME" and "NUMBER OR ADDRESS" shown in Fig. 5A reflect the "NAME" and "NUMBER OR ADDRESS" of the other party information table 32 shown in Fig. 4.

In the transmission permitted other party information table 33 shown in Fig. 5A, "PERMITTED" is set as Transmission Prohibited or Permitted for the name "ZBC CORP." and address "bbb@xxx.shar*.co.jp", the name "ABC CORP." and number "098-765-432*", the name "MNH CORP." and number "949-123-123*", "LOPI CORP." and address "zzz@xxx.shar*.co.jp", and "BON CORP." and number "949-123-123*", while "Prohibited" is set for the name "SHAR* CORP." and number "949-123-123*", the name "XCV CORP." and number "949-123-123*", and "MIKITY CORP." and number "949-123-123*".

Fig. 5B illustrates an example of the transmission permitted other party information table 34 in which are registered only other parties for whom a transmission is permitted. The transmission permitted other party information table 34 is a table used instead of the transmission permitted other party information table 33 shown in Fig. 5A in order to determine whether or not an other party is permitted, and indicates that the other parties registered in the transmission permitted other party information table 34 are permitted. The transmission permitted other party information table 34 stores the "NAME" and the "NUMBER OR ADDRESS" as permitted other party information. In the transmission permitted other party information table 34 shown in Fig. 5B, the name "ABC CORP." and number "098-765-432*", and "LOPI CORP." and address "zzz@xxx.shar*.co.jp", are registered as the other parties for whom a transmission is permitted.

The transmission permitted other party information tables shown in Figs. 5A and 5B are such that, when there are a plurality of other party information tables 32, there is one table for the other party information of all the users' other party information tables 32, but a transmission permitted other party information table for each user's other party information table 32 may be provided.

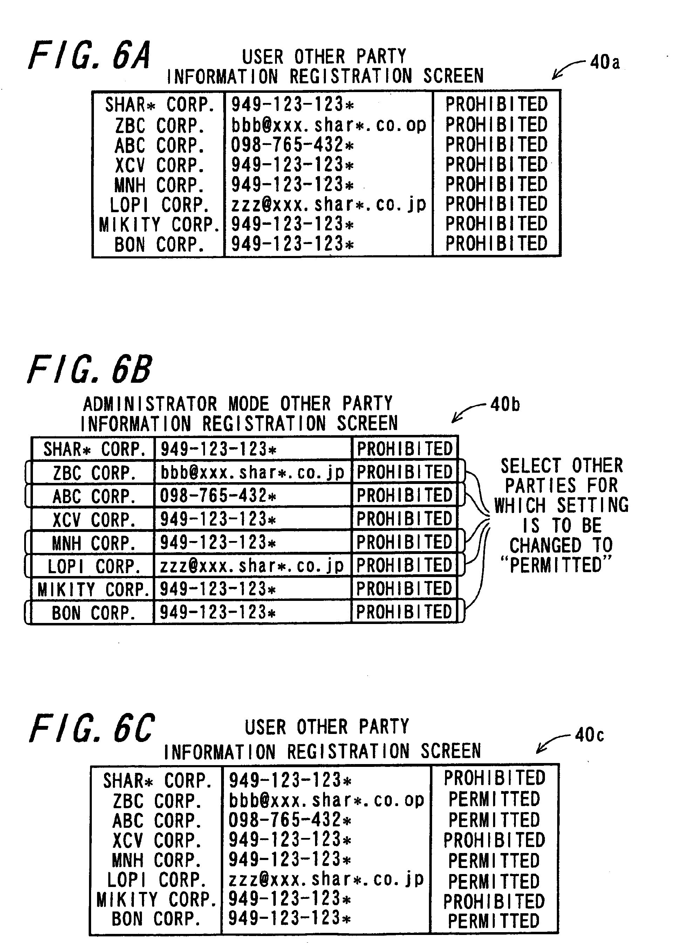

Figs. 6A to 6C illustrate examples 40 of other party information registration screens for setting the other party information table 32 shown in Fig. 4, and the transmission permitted other party information table 33 shown in Fig. 5A. Fig. 6A illustrates a user other party information registration screen 40a displayed in the operation and display section 15. The user other party information registration screen 40a being a screen for the user to register an other party in the other party information table 32, a "NAME" column, a "NUMBER OR ADDRESS" column, and a "TRANSMISSION PROHIBITED OR PERMITTED" column, are displayed. Although the user can set the "NAME" column and "NUMBER OR ADDRESS" column by operating the operation and display section 15, and inputting information necessary for the registration, only the administrator can set the "TRANSMISSION PROHIBITED OR PERMITTED" column, so "PROHIBITED" is unconditionally displayed in the "TRANSMISSION PROHIBITED OR PERMITTED" column corresponding to the newly inputted "NAME" column and "NUMBER OR ADDRESS" column. In Fig. 6A, the same eight other parties as the other parties of the other party information table 32 shown in Fig. 4 are displayed, but the possibility of the transmission shows "PROHIBITED" for all of them.

Fig. 6B illustrates an administrator mode other party information registration screen 40b displayed in the operation and display section 15. The administrator mode other party information registration screen 40b is a screen for administrator to set the "TRANSMISSION PROHIBITED OR PERMITTED" column of the transmission permitted other party information table 33 for each other party. The administrator inputs his or her own administrator ID using the operation and display section 15 and, when the inputted administrator ID is registered in the administrator information table 31 shown in Fig. 3, can display the administrator mode other party information registration screen 40b. "PROHIBITED" is unconditionally set in the "TRANSMISSION PROHIBITED OR PERMITTED" column of the other party information newly registered by the user, but the administrator, by selecting an other party for which to permit a transmission, can set "PERMITTED" in the "TRANSMISSION PROHIBITED OR PERMITTED" column. In Fig. 6B, "ZBC CORP.", "ABC CORP.", "MNH CORP.", "LOPI CORP.", and "BON CORP" are selected, and "PROHIBITED" in the "TRANSMISSION PROHIBITED OR PERMITTED" column is changed to "PERMITTED".

Fig. 6C illustrates a user other party information registration screen 40c after "PERMITTED" is set in the "TRANSMISSION PROHIBITED OR PERMITTED" column by the administrator. In Fig. 6C, "PERMITTED" is set in the "TRANSMISSION PROHIBITED OR PERMITTED" column of "ZBC CORP.", "ABC CORP.", "MNH CORP.", "LOPI CORP.", and "BON CORP".

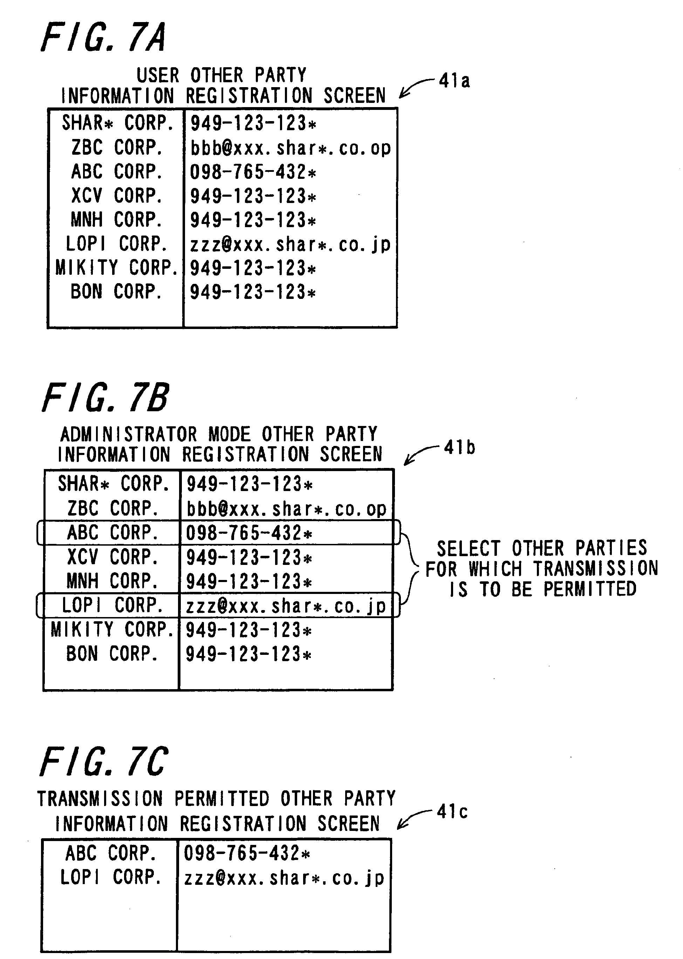

Figs. 7A to 7C illustrate examples 41 of other party information registration screens for setting the other party information table 32 shown in Fig. 4, and the transmission permitted other party information table 34 shown in Fig. 5B. Fig. 7A illustrates a user other party information registration screen 41a displayed in the operation and display section 15. The user other party information registration screen 41a being a screen for the user to register an other party in the other party information table 32, a "NAME" column, and a "NUMBER OR ADDRESS" column, are displayed. The user can set the "NAME" column and "NUMBER OR ADDRESS" column by operating the operation and display section 15, and inputting information necessary for the registration. In Fig. 7A, the same eight other parties as the other parties of the other party information table 32 shown in Fig. 4 are shown.

Fig. 7B illustrates an administrator mode other party information registration screen 41b displayed in the operation and display section 15. The administrator mode other party information registration screen 41b is a screen for administrator to register an other party for which a transmission is permitted in the transmission permitted other party information table 34. The administrator inputs his or her own administrator ID using the operation and display section 15 and, when the inputted administrator ID is registered in the administrator information table 31 shown in Fig. 3, can display the administrator mode other party information registration screen 41b. The other party information registered in the other party information table 32 being displayed on the administrator mode other party information registration screen 41b, the administrator selects the other party for which a transmission is permitted from among the displayed other party information. The other party selected by the administrator is registered in the transmission permitted other party information table 34 stored in the storage device 12. In Fig. 7B, "ABC CORP." and "LOPI CORP." are selected, and the "ABC CORP." and "LOPI CORP." other party information is registered in the transmission permitted other party information table 34.

Fig. 7C illustrates a transmission permitted other party information registration screen 41c which displays contents of the transmission permitted other party information table 34 stored in the storage device 12. "ABC CORP." and "LOPI CORP." registered in the transmission permitted other party information table 34 are displayed on the transmission permitted other party information registration screen 41c shown in Fig. 7C.

With the other party information registration screens 41 shown in Figs. 7A to 7C, the other party information registered in the other party information table 32 is displayed and, by the administrator selecting the other party for which a transmission is permitted from among the displayed other party information, the other party for which a transmission is permitted is registered in the transmission permitted other party information table 34, but the administrator, using the operation and display section 15, may input directly the other party information of the other party for which a transmission is permitted, and register the inputted other party information in the transmission permitted other party information table 34.

Alternatively, the "TRANSMISSION PROHIBITED OR PERMITTED" column may be provided in the other party information table 32, a similar administrator other party information table may be provided for administrator's use, the user and administrator may set a permission or prohibition of a transmission in the "TRANSMISSION PROHIBITED OR PERMITTED" column of their respective tables, and other party information for which the permission may be set in the "TRANSMISSION PROHIBITED OR PERMITTED" column of both tables is set in the transmission permitted other party information table 34. At that time, the other party information registered in the administrator other party information table may reflect the other party information of the other party information table 32, but, independently of the other party information of the other party information table 32, the administrator, using the operation and display section 15, may input directly the other party information, registering it in the administrator other party information table.

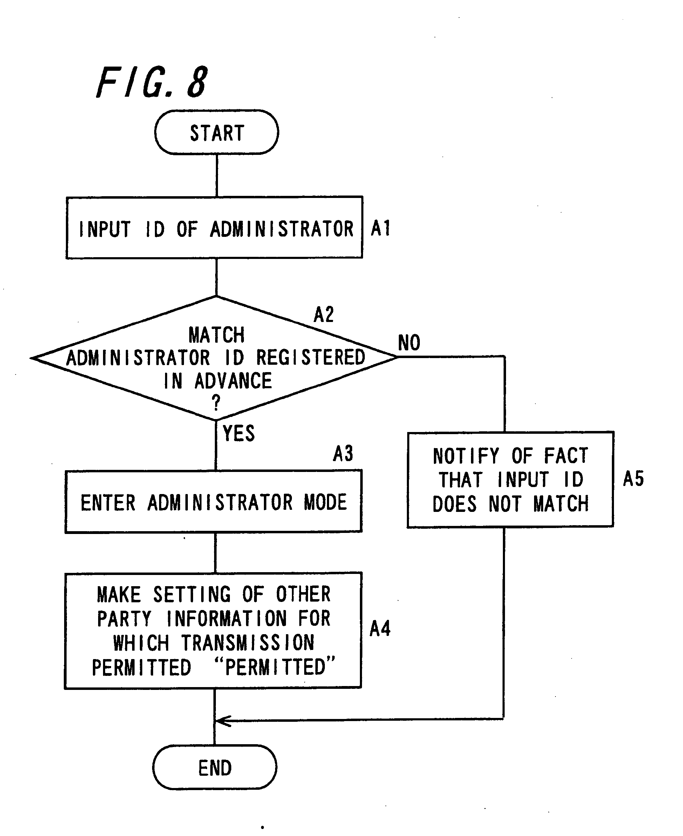

Fig. 8 is a flowchart of a communication possibility setting process carried out by the facsimile apparatus 1 shown in Fig. 1. The communication possibility setting process is a process of setting the "TRANSMISSION PROHIBITED OR PERMITTED" column of the transmission permitted other party information table 33 shown in Fig. 5A, but a setting is done in the same way for the transmission permitted other party information table 34 illustrated in Fig. 5B. On selecting, from a menu displayed in the operation and display section 15, an item setting a permitting of a transmission to an other party, a screen for setting the permitting of a transmission to an other party, for example, the user other party information registration screen 40a shown in Fig. 6A, is displayed in the operation and display section 15, and the process proceeds to step A1.

In step A1, the ID of the administrator is inputted using the operation and display section 15. In step A2, it is determined whether or not the ID matches the administrator ID registered in advance. If the administrator ID inputted from the operation and display section 15 matches any of the administrator IDs registered in advance in the administrator information table 31 stored in the storage device 12, the process proceeds to step A3, while if does not match, the process proceeds to step A5.

In step A3, entering an administrator mode, for example, the administrator mode other party information registration screen 40b shown in Fig. 6B is displayed in the operation and display section 15. In step A4, the setting is put to "PERMITTED" by selecting other party information for which communication is permitted, and the communication possibility setting process is finished. In step A5, by displaying in the operation and display section 15 the fact that the inputted ID does not match, the user who has inputted the ID is notified of that fact, and the communication possibility setting process is finished.

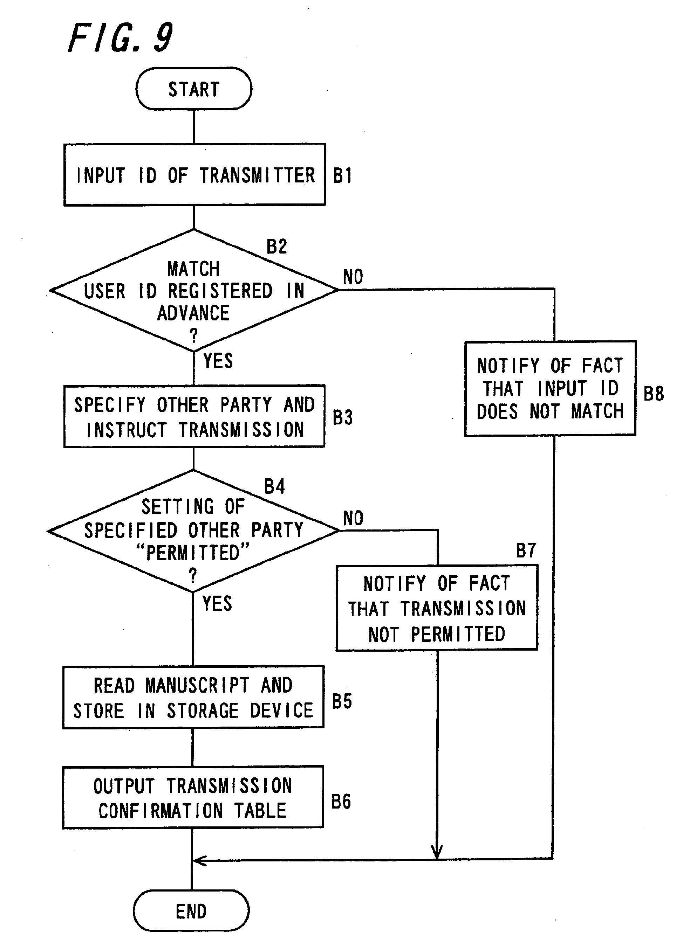

Fig. 9 is a flowchart of a transmission confirmation table output process carried out by the facsimile apparatus 1 shown in Fig. 1. When an item for transmitting information is selected from the menu displayed in the operation and display section 15, a screen for outputting a transmission confirmation table, which is a preliminary stage for transmitting the information, is displayed in the operation and display section 15, and the process proceeds to step B1.

In step B1, a transmitter ID is inputted. A transmitter, after setting a transmission manuscript in the facsimile apparatus 1, inputs the transmitter ID using the operation and display section 15. In step B2, it is determined whether or not the ID matches the user ID registered in advance. If the user ID inputted from the operation and display section 15 matches any of the user IDs registered in advance in the user information table 30 stored in the storage device 12, the process proceeds to step B3, while if does not match, the process proceeds to step B8.

In step B3, an other party is specified, and a transmission instruction is given. Regarding the specification of the other party, the telephone number, for example, "09-8765932*", or electronic mail address may be inputted directly using the operation and display section 15, the name of the other party may be inputted directly, or alternatively, the other parties in a telephone directory, for example, the other party information table 32 shown in Fig. 4, may be displayed as a list, and may be selected from among them. Regarding the transmission instruction, the instruction is given by, for example, depressing an operation button for a transmission among the operation buttons of the operation and display section 15.

In step B4, it is determined whether or not the setting of the indicated other party is "PERMITTED". If "PERMITTED" is set in the transmission permitted other party information table 33 stored in the storage device 12 for the other party for which the transmission is instructed, or if the other party is registered in the transmission permitted other party information table 34, it is determined that the setting of the indicated other party is "PERMITTED", and the process proceeds to step B5. If "PROHIBITED" is set in the transmission permitted other party information table 33 stored in the storage device 12 for the other party for which the transmission is instructed, or if the other party is not registered in the transmission permitted other party information table 34, it is determined that the setting of the indicated other party is not "PERMITTED", and the process proceeds to step B7.

In step B5, the transmission manuscript is read by the image reading device 13, the read data is correlated to the other party indicated in step B3, and to the transmitter ID inputted in step B1, and stored in the image storage device 19 together with the other party and transmitter ID. The read data stored in the image storage device 19 is data converted to encoded data by the encoding and decoding section 20.

For example, when the telephone number inputted in step B3 is "098765432*", as the telephone number "098765432*" is registered third in the transmission permitted other party information table 33 shown in Fig. 5A, and the transmission is permitted, the transmission manuscript for that telephone number is read by the image reading device 13, and stored in the image storage device 19.

In step B6, the transmission confirmation table is outputted, and the transmission confirmation table output process is finished. The transmission confirmation table is printed matter on which the indicated other party and administration information among the read data, and information on a first page of the read manuscript, are outputted by printing. The output is not limited to the printed matter, but it may be in form of electronic data. When outputting as electronic data, it is possible to attach the electronic data to an electronic mail, and transmit it to the administrator. The administration information may be encoded into code information, for example, a bar code or a two-dimensional code, and it may be identification information, such as a number, which can identify the read data stored in the image storage device 19. When using a number as the identification information, it is sufficient to input the number instead of reading the transmission confirmation table.

In step B7, notification of the fact that the transmission is not permitted is displayed in the operation and display section 15, and the transmission confirmation table output process is finished. In step B8, by displaying in the operation and display section 15 the fact that the inputted ID does not match, the user who has inputted the ID is notified of that fact, and the transmission confirmation table output process is finished.

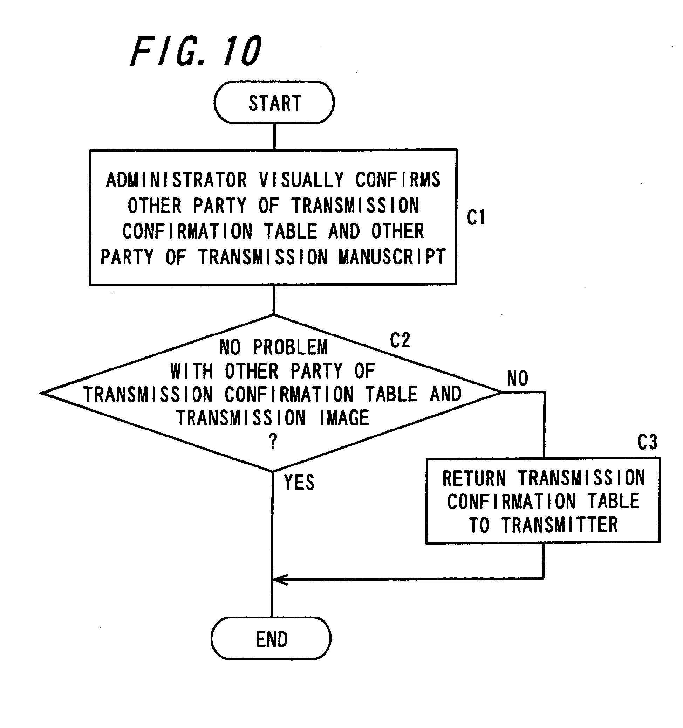

Fig. 10 is a flowchart of a transmission confirmation table confirmation process carried out by the administrator. When the administrator is handed the transmission confirmation table by the transmitter, and requested to transmit the manuscript, the process proceeds to step C1. In step C1, the administrator visually confirms the other party of the transmission confirmation table, and the other party of the transmission manuscript. In step C2, it is determined whether or not there is a problem with the other party of the transmission confirmation table or the transmission image. If there is no problem, the transmission confirmation table confirmation process is finished, while if there is a problem, the process proceeds to step C3. In step C3, the transmission confirmation table is returned to the transmitter, and the transmission confirmation table confirmation process is finished.

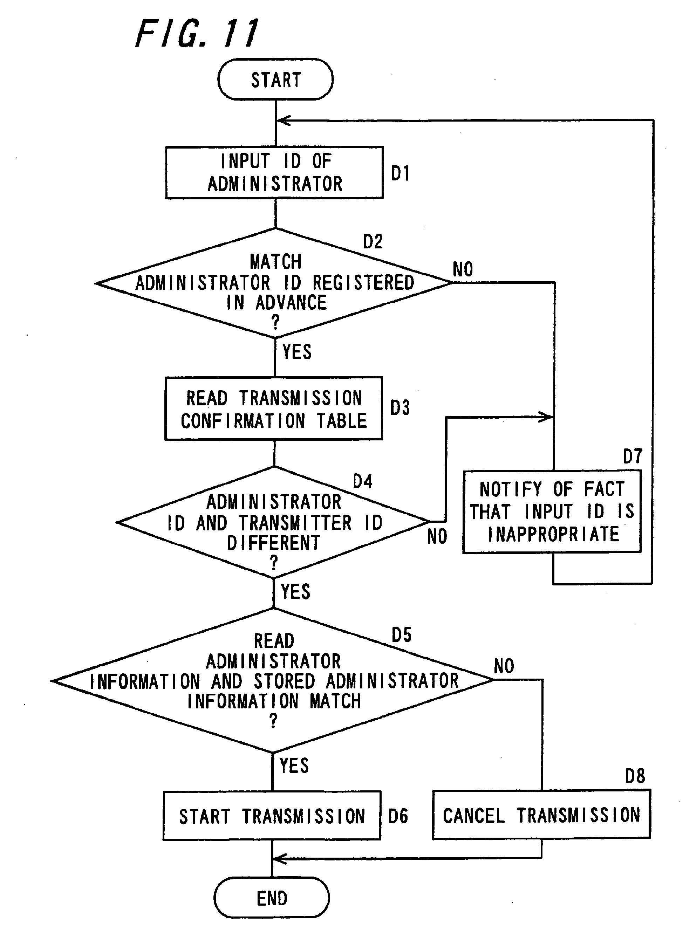

Fig. 11 is a flowchart of a transmission process carried out by the facsimile apparatus 1 shown in Fig. 1. When a transmission confirmation table with which it has been determined by the administrator that there is no problem is set in the facsimile apparatus 1, the process proceeds to step D1.

In step D1, the administrator ID is inputted using the operation and display section 15. In step D2, it is determined whether or not the ID matches the administrator ID registered in advance. If the administrator ID inputted from the operation and display section 15 matches any of the administrator IDs registered in advance in the administrator information table 31 stored in the storage device 12, the process proceeds to step D3, while if does not match, the process proceeds to step D7.

In step D3, the transmission confirmation table is read. In step D4, it is determined whether or not the administrator ID and transmitter ID are different. When the transmitter ID stored in the image storage device 19 is one, it is determined whether or not the administrator ID inputted in step D1 and the transmitter ID stored in the image storage device 19 are different. If the administrator ID and transmitter ID are different, the process proceeds to step D5, while if the administrator ID and transmitter ID are not different, the process proceeds to step D7. When a plurality of transmitter IDs stored in the image storage device 19 exist, it is determined whether or not the administrator ID inputted in step D1 and the transmitter ID, among the transmitter IDs stored in the image storage device 19, correlated to the encoded data including the same administration information as the administration information read from the transmission confirmation table, are different.

In step D5, it is determined whether or not the read administration information and stored administration information match. When there is one piece of read data stored in the image storage device 19, if the administration information indicated by the code information read from the transmission confirmation table and the administration information included in the read data stored in the image storage device 19 match, the process proceeds to step D6, while if they do not match, the process proceeds to step D8. When there are a plurality of pieces of read data stored in the image storage device 19, it is determined whether or not the administration information indicated by the code information read from the transmission confirmation table and the administration information included in any of data pieces of the read data stored in the image storage device 19 match. When the read administration information is encoded, the control device 11 deciphers it, converting it to the administration information before being encoded.

In step D6, the encoded data including the same administration information as the administration information indicated by the code information read from the transmission confirmation table are transmitted to the other party correlated to the encoded data, and the transmission process is finished. In step D7, by displaying in the operation and display section 15 the fact that the inputted ID is inappropriate, the user who has inputted the ID is notified of that fact, and the transmission process is finished. In step D8, the transmission is cancelled, and the transmission process is finished.

The determination carried out in step B4 shown in Fig. 9, that is, the determination of whether or not the setting of the indicated other party is "PERMITTED", may be shifted to between steps D4 and D5 shown in Fig. 11. In the event of carrying out the determination of whether or not the setting of the indicated other party is "PERMITTED" between steps D4 and D5, in the transmission confirmation table output process shown in Fig. 9, even if the other party is not permitted, the manuscript is read and, as well as storing the information of the read manuscript in the storage device 12, the transmission confirmation table is outputted. Consequently, there is no need to newly read the manuscript at a time of a retry.

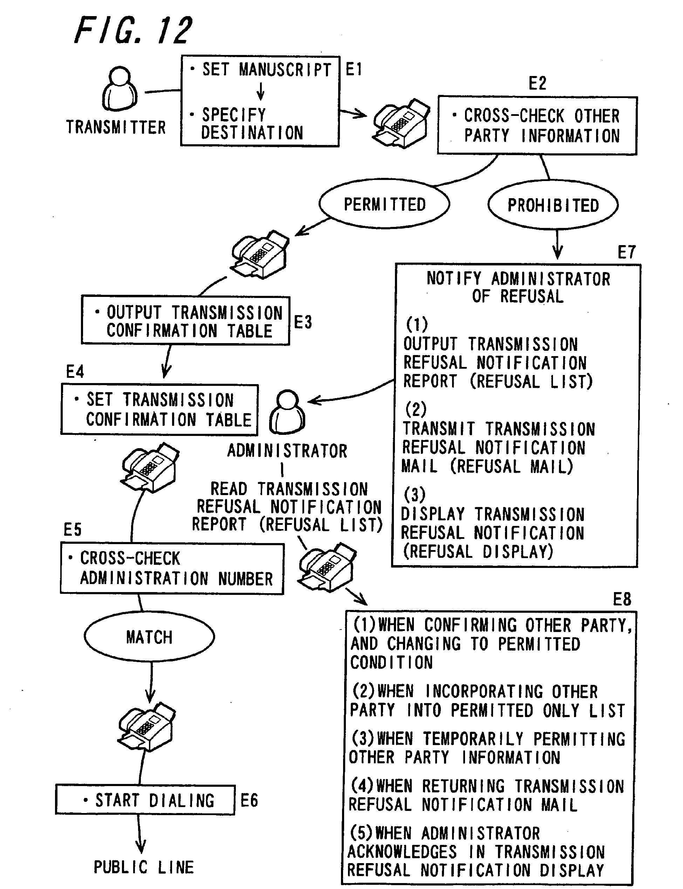

Fig. 12 illustrates an interruption and retransmission procedure in the facsimile apparatus 1 shown in Fig. 1. In procedure E1, the manuscript is set in the facsimile apparatus 1 by the transmitter, and a destination of the other party to which the manuscript is to be transmitted is inputted. In procedure E2, the facsimile apparatus 1 cross-checks the other party information. That is, the facsimile apparatus 1 determines, based on the transmission permitted other party information table 33 or transmission permitted other party information table 34, whether or not the other party inputted in procedure E1 is an other party for which the transmission is permitted. If it is an other party for which the transmission is permitted, the process proceeds to procedure E3, while if it is not an other party for which the transmission is permitted, the process proceeds to procedure E7.

In procedure E3, the facsimile apparatus 1 outputs the transmission confirmation table. In procedure E4, the transmission confirmation table is set in the facsimile apparatus 1 by the administrator who has confirmed that there is no problem with the transmission confirmation table. In procedure E5, the facsimile apparatus 1 carries out a cross-check of an administration number, that is, of the administrator ID. When the administrator ID matches any of administrator IDs in the administrator information table 31, the process proceeds to procedure E6. In procedure E6, a dialing is started, and the manuscript data is transmitted via the public line.

In procedure E7, the administrator is notified of the fact that the transmission has been refused due to the other party being one for which the transmission is not permitted. The notification to the administrator is carried out by (1) an output of a report (hereafter called a "refusal list") for notifying of the fact that the sending has been refused, (2) a transmission of an electronic mail (hereafter called a "refusal mail") for notifying of the fact that the sending has been refused, or (3) a display ((hereafter called a "refusal display") for notifying of the fact that the sending has been refused. The control device 11 causes the printing device 14 to output the refusal list. The control device 11 causes the LAN transfer control section 18 to transmit the refusal mail. The control device 11 causes the operation and display section 15 to display the refusal display thereon.

In procedure E8, the administrator who receives the notification by means of the refusal list, (1) after confirming the other party, and changing the confirmed other party, among the other parties of the transmission permitted other party information table 33, to "PERMITTED", (2) after confirming the other party, and incorporating the confirmed other party into the transmission permitted other party information table 34, or (3) after temporarily permitting the other party, causes the transmitter to carry out the transmission again from procedure E1. The temporary permission is given by, for example, setting "TEMPORARY PERMISSION", indicating that permission is temporarily given, in the "TRANSMISSION PROHIBITED OR PERMITTED" column of the transmission permitted other party information table 33, and returning "TEMPORARY PERMISSION" to "PROHIBITED" after the transmission. Furthermore, the administrator who receives the notification by means of the refusal mail, (4) after incorporating the other party into the transmission permitted other party information table 34 by returning a reply mail returning a response to the notification electronic mail, causes the transmitter to carry out the transmission again from procedure E1. Further still, the administrator who receives the notification by means of the refusal display, (5) out of the "TRANSMISSION PROHIBITED OR PERMITTED" column of the transmission permitted other party information table 33, after changing the "TRANSMISSION PROHIBITED OR PERMITTED" column of the refusal display other party to "PERMITTED" by responding to and acknowledging the displayed refusal notification, causes the transmitter to carry out the transmission again from procedure E1.

With the procedure shown in Fig. 12, as the other party is cross-checked in procedure E2 and, only when it is permitted, the transmission confirmation table output of procedure E3 carried out, when carrying out the transmission again after procedure E8, it is restarted from procedure E1. By interchanging procedure E2 and procedure E3, and changing procedure so as to cross-check the other party after outputting the transmission confirmation table, the transmission confirmation table is also outputted when the other party is not permitted, meaning that it is possible to restart from procedure E4 after procedure E8.

In procedure E7, the administrator is notified of the fact that the transmission has been refused due to the other party being one for which the transmission is not permitted, but there may be arranged so that the contents of the notification are stored in the storage device 12, and that the administrator can refer to the contents of the notification stored in the storage device 12 using the operation and display section 15, and change the other party for which the transmission is not permitted to "PERMITTED". Specifically, it is determined in step B4 shown in Fig. 9, or between steps D4 and D5 shown in Fig. 11, that the setting of the other party is not "PERMITTED" and, when carrying out the process of notifying of the fact that the process of step B7 shown in Fig. 9, that is, the transmission, is not permitted, the contents of the notification are stored in the storage device 12. The administrator confirms whether or not the notification of the fact that the transmission is not permitted is stored in the storage device 12. When the notification of the fact that the transmission is not permitted is stored in the storage device 12, the administrator inputs the administrator ID and, in the case where the inputted administrator ID is registered in the administrator information table 31, changes the setting of the transmission permitted other party information table 33 shown in Fig. 5A, or of the transmission permitted other party information table 34 shown in Fig. 5B, for the other party for which the fact that the transmission is refused has been notified of. The administrator can carry out the changing of the setting of the other party for which the fact that the transmission is refused has been notified of at a time desired by the administrator. When the determination carried out in step B4 shown in Fig. 9, that is, the determination of whether or not the setting of the indicated other party is "PERMITTED", is carried out between steps D4 and D5, the information to be transmitted read by the image reading device 13, that is, the information to be transmitted, is stored in the image storage device 19, so the administrator, identifying the information to be transmitted using the transmission confirmation table, and displaying the identified information to be transmitted in the operation and display section 15, can also confirm the contents of the transmission manuscript. Furthermore, there may be arranged so that a plurality of contents of notifications of the fact that the transmission has been refused are stored accumulated in the storage device 12, and the administrator can process them together at a desired time.

In the heretofore described embodiment, the administrator carries out the confirmation of the validity of the other party to which a transmission is to be made, and of the contents of the transmission manuscript, as well as the transmission of the manuscript, but, rather than the administrator, a user other than the transmitter registered in the user information table 30 may carry out them. In the case of the administrator, whether or not it is a permitted administrator is determined by whether or not the administrator is registered in the administrator information table 31, but when a user other than the transmitter carries them out, whether or not it is a user other than the transmitter is determined by whether or not it is a user who, being registered in the user information table 30, is a user other than the transmitter. In this case too, only the administrator can carry out the setting and changing of the transmission permitted other party information table 33 or the transmission permitted other party information table 34.

In this way, information stored in a storage medium is read by, for example, the image reading device 13, which is reading means. For example, an other party, which is transmission destination information indicating a transmission destination, and, for example, user ID, which is operator identification information for identifying an operator, are inputted by, for example, the operation and display section 15, which is input means. Information to be transmitted read by the reading means, the transmission destination information inputted by the input means, for example, the transmission permitted other party information table 33 or the transmission permitted other party information table 34, which are transmission destination permission information indicating a transmission destination to which a transmission of information is permitted, and, for example, the administrator information table 31, which is administrator identification information indicating that it is an administrator who is permitted to carry out a transmission of information, are stored, with the information to be transmitted and the transmission destination information correlated, by, for example, the storage device 12 and the image storage device 19, which are storage means. Information is stored in, for example, the transmission confirmation table, which is the storage medium, and outputted by, for example, the printing device 14, which is output means.

Then, with, for example, the control device 11, which is control means, when the transmission destination information is inputted by the input means, the information to be transmitted is read by the reading means, administration information including transmission manuscript partial information including at least a portion of information to be transmitted that is read by the reading means and the transmission destination information inputted by the input means, is stored in the storage medium and outputted by the output means, and furthermore, in the case where the operator identification information is inputted by the input means, and the operator identification information inputted by the input means matches any of administrator identification information stored in the storage means, the information stored in the storage medium outputted by the output means is read by the reading means, and in the case where the transmission destination indicated by the transmission destination information inputted by the input means is a transmission destination included in the transmission destinations indicated by the transmission destination permission information stored in the storage means, information to be transmitted that, out of the information to be transmitted stored in the storage means, corresponds to the transmission destination indicated by the transmission destination information of the read administration information, and includes information matching the transmission manuscript partial information included in the administration information, is transmitted by transmission means to the transmission destination indicated by the transmission destination information included in the administration information read by the reading means.

Consequently, the administrator can check a portion of the transmission manuscript and the transmission destination, and furthermore, as it is transmitted only by the administrator to a transmission destination for which a transmission is permitted, it is possible to prevent an erroneous transmission and an illicit transmission of the transmission manuscript, whatever the transmission destination may be. In this way, it is possible to prevent an information leak.

Furthermore, it is possible, with the input means, to input setting change information for changing the setting of the transmission destination permission information stored in the storage means. When the operator identification information inputted by the input means matches any of administrator identification information stored in the storage means, the setting of the transmission destination permission information stored in the storage means is changed, based on the setting change information inputted by the input means, by the control means. Consequently, only the administrator can change the setting of the transmission destination permission information. In this way, it is possible to prevent an illicit transmission by someone other than the administrator.

Further still, for example, the user information table 30, which is permitted operator identification information for identifying an operator permitted to carry out an operation, is further stored by the storage means. With the control means, only when first operator identification information out of the operator identification information is inputted by the input means, and the inputted first operator identification information matches any of permitted operator identification information stored in the storage means, the information to be transmitted is read by the reading means, and the administration information is stored in the storage medium and outputted by the output means, and only when, in causing the transmission means to transmit the information to be transmitted, the operator identification information inputted by the input means differs from the first operator identification information out of the operator identification information, the information to be transmitted is transmitted by the transmission means. Consequently, it is possible to make the administrator a person differing from the transmitter. In this way, it is possible to carry out a third person check.

Furthermore, as the administration information is encoded information, it is possible to easily recognize the encoded information printed in a storage medium, for example, a printed matter. Consequently, there is no need to provide complicated recognition means.

Further still, as the transmission destination permission information is information including only the transmission destination information on the transmission destinations for which a transmission is permitted, it is possible to administer the transmission destination permission information separately from the telephone directory. Consequently, it is possible to easily prevent an accessing of the transmission destination permission information by a person other than the administrator.

Furthermore, as the transmission destination permission information is information in which is set a transmission permission or a transmission prohibition for all the transmission destinations, it is possible to determine the possibility of a transmission for each transmission destination. Consequently, it is possible to easily determine whether the reason that a transmission is not possible is that there has not yet been a registration, or that the setting is transmission prohibited.

Further still, as the transmission destination permission information is information indicating the transmission destinations for which the transmission permission is set, in the case of both operator transmission destination permission information in which the transmission permission or transmission prohibition is set by the operator, and administrator transmission destination permission information in which the transmission permission or transmission prohibition is set by the administrator, it is possible to transmit only to a transmission destination for which both the transmitter and the administrator set transmission permitted. Consequently, it is possible to more strictly limit the transmission destination.

Furthermore, transmission interruption information indicating interruption of a transmission due to the transmission destination being not one for which a transmission destination is permitted is further outputted by the output means. With the control means, when the transmission destination indicated by the transmission destination information inputted by the input means is not a transmission destination included in the transmission destinations indicated by the transmission destination permission information stored in the storage means, the transmission interruption information is outputted by the output means. Consequently, it is possible to inform the transmitter or administrator that it is not possible to transmit due to the transmission destination being one for which a transmission is not permitted. In this way, it is possible to easily take measures for restarting the transmission.

Further still, at least one of a printing output section which stores in the storage medium and outputs the transmission interruption information, a mail output section which outputs the transmission interruption information as an electronic mail to the administrator indicated by administrator identification information which matches the operator identification information inputted by the input means, out of the administrator identification information stored in the storage means, and a display output section which displays and outputs on a display device the transmission interruption information, is included in the output means. Consequently, it is possible to inform the transmitter or administrator using a storage medium, for example, a printed matter, an electronic mail, or a display in display means. In this way, the transmitter or administrator can easily understand that a transmission has been interrupted.

Furthermore, with the control means, when the operator identification information is inputted by the input means in response to the transmission interruption information outputted by the output means and, and the inputted operator identification information matches any of administrator identification information stored in the storage means, after the setting of the transmission destination permission information stored in the storage means is changed to transmission permitted based on setting change information inputted by the input means, the information to be transmitted is transmitted by the transmission means. Consequently, when a transmission is interrupted, the administrator can change the setting of the transmission destination from prohibited to permitted, and can correctly transmit the interrupted transmission. In this way, even when the setting is not transmission permitted, the administrator can take measures easily.

Further still, the transmission interruption information includes transmission destination information indicating the transmission destination for which the transmission has been interrupted. With the control means, when the operator identification information is inputted by the input means in response to the transmission interruption information outputted by the output means, and the inputted operator identification information matches any of administrator identification information stored in the storage means, after changing the setting of the transmission destination permission information of the transmission destination indicated by the transmission destination information included in the transmission interruption information to transmission permitted, out of the transmission destination permission information stored in the storage means, the information to be transmitted is transmitted by the transmission means. Consequently, when a transmission is interrupted and the administrator gives permission, it is possible to automatically change the setting of the transmission destination for which the transmission has been interrupted from prohibited to permitted, and it is possible to correctly transmit the interrupted transmission. In this way, even when the setting is not transmission permitted, the administrator can take measures easily.

Furthermore, with the control means, when the operator identification information is inputted by the input means in response to the transmission interruption information outputted by the output means, and the inputted operator identification information matches any of administrator identification information stored in the storage means, the information to be transmitted is transmitted by the transmission means, without the setting of the transmission destination permission information stored in the storage means being changed. Consequently, when a transmission is interrupted and the administrator gives permission, it is possible to temporarily change the setting of the transmission destination for which the transmission has been interrupted from prohibited to permitted, and it is possible to correctly transmit the interrupted transmission. In this way, even when the setting is not transmission permitted, the administrator can take measures easily.

Further still, an electronic mail is received by, for example, the LAN transfer control section 18 which is reception means. With the control means, when an electronic mail responding to an electronic mail outputted by the output means is received by the reception means, after the setting of the transmission destination permission information stored in the storage means is changed to transmission permitted, the information to be transmitted is transmitted by the transmission means. Consequently, when a transmission is interrupted and the administrator responds with an electronic mail, it is possible to automatically change the setting of the transmission destination for which the transmission has been interrupted from prohibited to permitted, and it is possible to correctly transmit the interrupted transmission. In this way, even when the setting is not transmission permitted, the administrator can take measures easily.

Furthermore, the transmission interruption information indicating interruption of a transmission due to the transmission destination being not one for which a transmission destination is permitted is stored, by the storage means, correlated with the transmission destination information indicating the transmission destination. Information including the transmission interruption information is outputted by the output means. Output instruction information instructing an output of the transmission interruption information is inputted by the input means. With the control means, when the transmission destination indicated by the transmission destination information inputted by the input means is not a transmission destination included in the transmission destinations indicated by the transmission destination permission information stored in the storage means, the transmission interruption information is stored in the storage means, and furthermore, when the output instruction information is inputted by the input means, the transmission destination permission information stored in the storage means is outputted, together with the correlated transmission destination, by the output means. Consequently, the administrator can carry out the work of changing or not changing the settings of the transmission destinations at one time. In this way, it is possible to reduce the workload of the administrator.

Further still, the information stored in the storage medium is read by, for example, the image reading device 13 which is the reading means. For example, the other party which is the transmission destination information indicating the transmission destination, and, for example, the user ID which is the operator identification information for identifying the operator, are inputted by, for example, the operation and display section 15 which is the input means. The information to be transmitted read by the reading means, the transmission destination information inputted by the input means, for example, the transmission permitted other party information table 33 or the transmission permitted other party information table 34 which are the transmission destination permission information indicating the transmission destination to which a transmission of information is permitted, and, for example, the administrator information table 31 which is the administrator identification information indicating that it is an administrator who is permitted to carry out a transmission of information, are stored, with the information to be transmitted and the transmission destination information correlated, by, for example, the storage device 12 and the image storage device 19 which are the storage means. The information is stored in, for example, the transmission confirmation table which is the storage medium, and outputted by, for example, the printing device 14 which is the output means.

Then, with, for example, the control device 11 which is the control means, when the transmission destination information is inputted by the input means, and the transmission destination indicated by the transmission destination information inputted by the input means is a transmission destination included in the transmission destinations indicated by the transmission destination permission information stored in the storage means, the information to be transmitted is read by the reading means, administration information including transmission manuscript partial information including at least a portion of information to be transmitted that is read by the reading means and the transmission destination information inputted by the input means, is stored in the storage medium and outputted by the output means, and furthermore, in the case where the operator identification information is inputted by the input means, and the operator identification information inputted by the input means matches any of administrator identification information stored in the storage means, the information stored in the storage medium that is outputted by the output means is read by the reading means, and the information to be transmitted that, out of the information to be transmitted stored in the storage means, corresponds to the transmission destination indicated by the transmission destination information of the read administration information, and includes information matching the transmission manuscript partial information included in the administration information, is transmitted by the transmission means to the transmission destination indicated by the transmission destination information included in the administration information read by the reading means.

Consequently, as it is sufficient that the administrator carries out a check of a portion of the transmission manuscript, and of the transmission destination, only when the transmission destination is permitted, and furthermore, as the transmission manuscript is transmitted only by the administrator to a transmission destination for which a transmission is permitted, it is possible to prevent an erroneous transmission and an illicit transmission of the transmission manuscript, whatever the transmission destination may be. In this way, it is possible to prevent an information leak.

Furthermore, the information stored in the storage medium is read by, for example, the image reading device 13 which is the reading means. For example, the other party which is the transmission destination information indicating the transmission destination, and, for example, the user ID which is the operator identification information for identifying the operator, are inputted by, for example, the operation and display section 15 which is the input means. The information to be transmitted read by the reading means, the transmission destination information inputted by the input means, for example, the transmission permitted other party information table 33 or the transmission permitted other party information table 34 which are the transmission destination permission information indicating the transmission destination to which a transmission of information is permitted, and, for example, the user information table 30 which is permitted operator identification information indicating that it is an operator who is permitted to carry out a transmission of information, are stored, with the information to be transmitted and the transmission destination information correlated, by, for example, the storage device 12 and the image storage device 19 which are the storage means. The information is stored in, for example, the transmission confirmation table which is the storage medium, and outputted by, for example, the printing device 14 which is the output means.

Then, with, for example, the control device 11 which is the control means, when the first operator information out of the operator identification information, and the transmission destination information, are inputted by the input means, and the inputted first operator identification information matches any of permitted operator identification information stored in the storage means, the information to be transmitted is read by the reading means, and the administration information including the transmission manuscript partial information including at least a portion of information to be transmitted that is read by the reading means and the transmission destination information inputted by the input means, is stored in the storage medium and outputted by the output means, and furthermore, in the case where the second operator information differing from the first operator information out of the operator identification information is inputted by the input means, and the inputted second operator identification information matches any of permitted operator identification information stored in the storage means, the information stored in the storage medium outputted by the output means is read by the reading means, and in the case where the transmission destination indicated by the transmission destination information inputted by the input means is a transmission destination included in the transmission destinations indicated by the transmission destination permission information stored in the storage means, the information to be transmitted that, out of the information to be transmitted stored in the storage means, corresponds to the transmission destination indicated by the transmission destination information of the read administration information, and includes the information matching the transmission manuscript partial information included in the administration information, is transmitted by the transmission means to the transmission destination indicated by the transmission destination information included in the administration information read by the reading means.

Consequently, an operator differing from the transmitter can check a portion of the transmission manuscript, and the transmission destination, and furthermore, as the transmission manuscript is transmitted only by the operator differing from the transmitter to a transmission destination for which a transmission is permitted, it is possible to prevent an erroneous transmission and an illicit transmission, whatever the transmission destination may be. In this way, it is possible to prevent an information leak.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

According to the invention, the administrator can check a portion of the transmission manuscript, and the transmission destination, and furthermore, as the transmission manuscript is transmitted only by the administrator to a transmission destination for which a transmission is permitted, it is possible to prevent an erroneous transmission and an illicit transmission, whatever the transmission destination may be. Consequently, it is possible to prevent an information leak.

According to the invention, as only the administrator can change the setting of the transmission destination permission information, it is possible to prevent an illicit transmission by someone other than the administrator.

According to the invention, as it is possible to make the administrator a person differing from the transmitter, it is possible to carry out a third person check.

According to the invention, as it is possible to easily recognize the encoded information printed in the storage medium, for example, a printed matter, there is no need to provide complicated recognition means.

According to the invention, as it is possible to administer the transmission destination permission information separately from the telephone directory, it is possible to easily prevent an accessing of the transmission destination permission information by a person other than the administrator.

According to the invention, as it is possible to determine the possibility of a transmission for each transmission destination, it is possible to easily determine whether the reason that a transmission is not possible is that there has not yet been a registration, or that the setting is transmission prohibited.

According to the invention, as it is possible to transmit only to a transmission destination for which both the transmitter and the administrator set transmission permitted, it is possible to more strictly limit the transmission destination.

According to the invention, as it is possible to inform the transmitter or administrator that it is not possible to transmit due to the transmission destination being one for which a transmission is not permitted, it is possible to easily take measures for restarting the transmission.

According to the invention, as it is possible to inform the transmitter or administrator using the storage medium, for example, a printed matter, an electronic mail, or a display on the display means, the transmitter or administrator can easily understand that a transmission has been interrupted.

According to the invention, as the administrator, when a transmission is interrupted, can change the setting of the transmission destination from prohibited to permitted, and can correctly transmit the interrupted transmission, even when the setting is not transmission permitted, the administrator can take measures easily.

According to the invention, as it is possible, when a transmission is interrupted and the administrator gives permission, to automatically change the setting of the transmission destination for which the transmission has been interrupted from prohibited to permitted and it is possible to correctly transmit the interrupted transmission, even when the setting is not transmission permitted, the administrator can take measures easily.

According to the invention, as it is possible, when a transmission is interrupted and the administrator gives permission, to temporarily change the setting of the transmission destination for which the transmission has been interrupted from prohibited to permitted and it is possible to correctly transmit the interrupted transmission, even when the setting is not transmission permitted, the administrator can take measures easily.

According to the invention, as it is possible, when a transmission is interrupted and the administrator responds with an electronic mail, to automatically change the setting of the transmission destination for which the transmission has been interrupted from prohibited to permitted and it is possible to correctly transmit the interrupted transmission, even when the setting is not transmission permitted, the administrator can take measures easily.

According to the invention, as the administrator can carry out the work of changing or not changing the settings of the transmission destinations at one time, it is possible to reduce the workload of the administrator.

According to the invention, as it is sufficient that the administrator carries out a check of a portion of the transmission manuscript, and of the transmission destination, only when the transmission destination is permitted, and furthermore, as the transmission manuscript is transmitted only by the administrator to a transmission destination for which a transmission is permitted, it is possible to prevent an erroneous transmission and an illicit transmission of the transmission manuscript, whatever the transmission destination may be. Consequently, it is possible to prevent an information leak.

According to the invention, as an operator differing from the transmitter can check a portion of the transmission manuscript, and the transmission destination, and furthermore, as the transmission manuscript is transmitted only by the operator differing from the transmitter to a transmission destination for which a transmission is permitted, it is possible to prevent an erroneous transmission and an illicit transmission, whatever the transmission destination may be. Consequently, it is possible to prevent an information leak.

## Claims

1. A communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and administrator identification information indicating that it is an administrator who is permitted to carry out a transmission of information, with the information to be transmitted and the transmission destination information correlated;
output means for storing in the storage medium and outputting information; and
control means,
the control means, when the transmission destination information is inputted by the input means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where the operator identification information is inputted by the input means, and the operator identification information inputted by the input means matches any of administrator identification information stored in the storage means, causing the reading means to read the information stored in the storage medium that is outputted by the output means, and in the case where a transmission destination indicated by the transmission destination information that is inputted by the input means is a transmission destination included in the transmission destinations that is indicated by the transmission destination permission information stored in the storage means, causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.

2. The communication apparatus of claim 1, wherein the input means is capable of inputting setting change information for changing the setting of the transmission destination permission information stored in the storage means, and
the control means, when the operator identification information inputted by the input means matches any of administrator identification information stored in the storage means, changes the setting of the transmission destination permission information stored in the storage means, based on the setting change information inputted by the input means.

3. The communication apparatus of claim 1 or 2, wherein the storage means further stores permitted operator identification information for identifying an operator permitted to carry out an operation, and
the control means, only when first operator identification information out of the operator identification information is inputted by the input means, and the inputted first operator identification information matches any of permitted operator identification information stored in the storage means, causes the reading means to read the information to be transmitted, and causes the output means to store in the storage medium and output the administration information, and
only when, in causing the transmission means to transmit the information to be transmitted, the operator identification information inputted by the input means differs from the first operator identification information out of the operator identification information, causes the transmission means to transmit the information to be transmitted.

4. The communication apparatus of any one of claims 1 to 3, wherein the administration information is encoded information.

5. The communication apparatus of claim 1 or 2, wherein the transmission destination permission information is information including only the transmission destination information on the transmission destinations for which a transmission is permitted.

6. The communication apparatus of claim 1 or 2, wherein the transmission destination permission information is information in which is set a transmission permission or transmission prohibition for all the transmission destinations.

7. The communication apparatus of claim 1 or 2, wherein the transmission destination permission information is information indicating the transmission destinations for which the transmission permission is set, in the case of both operator transmission destination permission information in which the transmission permission or transmission prohibition is set by the operator, and administrator transmission destination permission information in which the transmission permission or transmission prohibition is set by the administrator.

8. The communication apparatus of claim 1 or 2, wherein the output means further outputs transmission interruption information indicating interruption of a transmission due to the transmission destination being not one for which a transmission destination is permitted, and
the control means, when the transmission destination indicated by the transmission destination information inputted by the input means is not a transmission destination included in the transmission destinations indicated by the transmission destination permission information stored in the storage means, causes the output means to output the transmission interruption information.

9. The communication apparatus of claim 8, wherein the output means includes at least one of:
a printing output section which stores in the storage medium and outputs the transmission interruption information,
a mail output section which outputs the transmission interruption information as an electronic mail to the administrator indicated by administrator identification information which matches the operator identification information inputted by the input means, out of the administrator identification information stored in the storage means, and
a display output section which displays and outputs on a display device the transmission interruption information.

10. The communication apparatus of claim 8 or 9, wherein the control means, when the operator identification information is inputted by the input means in response to the transmission interruption information outputted by the output means, and the inputted operator identification information matches any of administrator identification information stored in the storage means, changes the setting of the transmission destination permission information stored in the storage means to transmission permitted based on setting change information inputted by the input means, and thereafter causes the transmission means to transmit the information to be transmitted.

11. The communication apparatus of claim 9, wherein the transmission interruption information includes transmission destination information indicating the transmission destination for which the transmission has been interrupted, and
the control means, when the operator identification information is inputted by the input means in response to the transmission interruption information outputted by the output means, and the inputted operator identification information matches any of administrator identification information stored in the storage means, changes setting of the transmission destination permission information of the transmission destination indicated by the transmission destination information included in the transmission interruption information, to transmission permitted, out of the transmission destination permission information stored in the storage means, and thereafter causes the transmission means to transmit the information to be transmitted.

12. The communication apparatus of claim 9, wherein when the operator identification information is inputted by the input means in response to the transmission interruption information outputted by the output means, and the inputted operator identification information matches any of administrator identification information stored in the storage means, the control means causes the transmission means to transmit the information to be transmitted, without changing the setting of the transmission destination permission information stored in the storage means.

13. The communication apparatus of claim 9, further comprising reception means for receiving an electronic mail,
wherein the control means, when an electronic mail responding to an electronic mail outputted by the output means is received by the reception means, changes the setting of the transmission destination permission information stored in the storage means, to transmission permitted, and thereafter causes the transmission means to transmit the information to be transmitted.

14. The communication apparatus of any one of claims 1 to 7, wherein the storage means stores transmission interruption information indicating interruption of a transmission due to the transmission destination being not one for which a transmission destination is permitted, correlated with the transmission destination information indicating the transmission destination,
the output means outputs information including the transmission interruption information,
the input means inputs output instruction information instructing an output of the transmission interruption information, and
the control means, when the transmission destination indicated by the transmission destination information inputted by the input means is not a transmission destination included in the transmission destinations indicated by the transmission destination permission information stored in the storage means, stores the transmission interruption information in the storage means, and furthermore, when the output instruction information is inputted by the input means, causes the output means to output the transmission destination permission information stored in the storage means, together with the correlated transmission destination.

15. A communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and administrator identification information indicating that it is an administrator who is permitted to carry out a transmission of information, with the information to be transmitted and the transmission destination information correlated;
output means for storing in the storage medium and outputting information; and
control means,
the control means, when the transmission destination information is inputted by the input means, and the transmission destination indicated by the transmission destination information inputted by the input means is a transmission destination included in the transmission destination indicated by the transmission destination permission information stored by the storage means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where the operator identification information is inputted by the input means, and the operator identification information inputted by the input means matches any of administrator identification information stored in the storage means, causing the reading means to read the information stored in the storage medium that is outputted by the output means, and causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.

16. A communication apparatus comprising:
reading means for reading information stored in a storage medium;
input means for inputting transmission destination information indicating a transmission destination, and operator identification information for identifying an operator;
storage means for storing information to be transmitted read by the reading means, the transmission destination information inputted by the input means, transmission destination permission information indicating a transmission destination to which a transmission of information is permitted, and permitted operator identification information indicating that it is an operator who is permitted to carry out a transmission of information, with the information to be transmitted and the transmission destination information correlated;
output means for storing in the storage medium and outputting information; and
control means,
the control means, when first operator identification information out of the operator identification information, and the transmission destination information are inputted by the input means, and the inputted first operator identification information matches any of permitted operator identification information stored in the storage means, causing the reading means to read the information to be transmitted, and causing the output means to store in the storage medium and output administration information including transmission manuscript partial information including at least a portion of the information to be transmitted that is read by the reading means and the transmission destination information inputted by the input means,
and furthermore, in the case where second operator information differing from the first operator information out of the operator identification information is inputted by the input means, and the inputted second operator identification information matches any of permitted operator identification information stored in the storage means, causing the reading means to read the information stored in the storage medium that is outputted by the output means, and in the case where a transmission destination indicated by the transmission destination information inputted by the input means is a transmission destination included in the transmission destinations that is indicated by the transmission destination permission information stored in the storage means, causing transmission means to transmit information to be transmitted that, out of the information to be transmitted stored in the storage means, corresponds to the transmission destination indicated by the transmission destination information of the read administration information, and includes information matching the transmission manuscript partial information included in the administration information, to the transmission destination indicated by the transmission destination information included in the administration information read by the reading means.
